Europäisches Patentamt

European Patent Office

Office européen des brevets

(11) Veröffentlichungsnummer: **0 382 219**
**A1**

## (12) EUROPÄISCHE PATENTANMELDUNG

(21) Anmeldenummer: 90102503.1

(22) Anmeldetag: 08.02.90

(51) Int. Cl.⁵: **A21C 3/08**

(30) Priorität: 08.02.89 DE 3903701

(43) Veröffentlichungstag der Anmeldung:
16.08.90 Patentblatt 90/33

(84) Benannte Vertragsstaaten:
AT BE CH DE ES FR GB GR IT LI LU NL SE

(71) Anmelder: Zwicker, Horst
Grabenstrasse 22
D-7320 Göppingen(DE)

(72) Erfinder: Zwicker, Horst
Grabenstrasse 22
D-7320 Göppingen(DE)

(74) Vertreter: Haug, Dietmar
Patentanwälte Andrae, Flach, Haug, Kneissl
Steinstrasse 44
D-8000 München 80(DE)

(54) **Verfahren zum Formen von Brezeln aus vorgefertigten Teigsträngen und Vorrichtung zur Durchführung des Verfahrens.**

(57) Bei einem Verfahren zum Formen von Brezeln aus vorgefertigten Teigsträngen 4 werden die Teigstränge 4 in beliebigen Abständen kontinuierlich zwischen einer Aufnahmestation 1 einer Knotenbildungsstation 2 und einer Freigabestation 3 gefördert, wobei zwischen der Aufnahmestation 1 und der Knotenbildungsstation 2 die Enden 6 jedes Teigstranges 4 gegeneinanderbewegt und das Mittelteil und die Seitenabschnitte des Teigstranges unter die Enden 6 abgesenkt werden, so daß sie eine bogenförmige Schleife bilden, die an der Knotenbildungsstation mit Hilfe zweier drehbarer Bürstenwalzen 18, 19 um 360° gedreht wird. Danach werden das Mittelteil und die Seitenabschnitte nach oben in eine Horizontallage umgelegt. Nach ihrer Freigabe senken sich die Enden 6 des Teigstranges auf die Seitenabschnitte des Teigstranges ab. Die Enden 6 jedes Teigstranges werden zwischen die Schenkel von zwei zwischen der Aufnahmestation 1 und der Freigabestation 3 U-förmig nach innen gefalteten oberen Trumen von zwei Greifbändern eingeklemmt und in Förderrichtung mitgenommen. Die oberen Trume 10 der Greifbänder 5 laufen zwischen der Aufnahmestation 1 und der Knotenbildungsstation 2 zusammen und zwischen der Knotenbildungsstation 2 und der Freigabestation 3 wieder auseinander. Das Verfahren und die Vorrichtung zu seiner Durchführung ermöglichen eine hohe Stückzahl pro Zeiteinheit, wobei die Zufuhr von Teigsträngen zu der Aufnahmestation 1 in beliebigen Abständen von Vorteil ist.

FIG. 2

## Verfahren zum Formen von Brezeln aus vorgefertigten Teig-strängen und Vorrichtung zur Durchführung des Verfahrens

Die Erfindung betrifft ein Verfahren zum Formen von Brezeln aus vorgefertigten Teigsträngen, wobei in zwei sich gegenüberliegenden Seitenabschnitten zwischen einem Mittelteil und den Enden eines jeden Teigstranges ein Knoten durch eine relative Verwindung von 360° zwischen den Enden und dem Mittelteil gebildet wird und dann die Enden und die Seitenabschnitte im Bereich zwischen dem Knoten und dem Mittelteil miteinander verbunden werden. Die Erfindung betrifft auch eine Vorrichtung zur Durchführung des Verfahrens.

Ein solches Verfahren wurde bereits in verschiedenen Druckschriften, wie z.B. in den DE-OSen 457 308, 571 517, 576 788, 1 532 330, 1 179 884, 1 782 289, 1 432 965, 2 113 773, 1 288 532 und in den DE-Osen 2 210 845 und 2 731 997 vorgeschlagen. Diesen bekannten Verfahren ist gemeinsam, daß die Teigstränge nur in gleichen Zeitabständen in die gewünschte Brezelform gebracht werden können, da die zugehörigen Vorrichtungen zur Durchführung der Verfahren allesamt taktweise arbeiten. Darüber hinaus werden bei allen bekannten Verfahren die Enden des jeweiligen Teigstranges bei der Knotenbildung miteinander verschlungen, während das Mittelteil und die Seitenabschnitte des Teigstranges zumindest über einen Teil der Knotenbildung ortsfest gehalten werden. Es ergibt sich hieraus, daß mit den bekannten Verfahren meist nur eine geringfügige höhere oder sogar eine kleinere Stückzahl pro Zeiteinheit im Vergleich zu der mit der manuellen Herstellung erhältlichen Stückzahl pro Zeiteinheit erhältlich ist. Durch das Verschlingen der Enden bei ortsfest gehaltenem Mittelteil werden die für die Durchführung der bekannten Verfahren erforderlichen Vorrichtungen im Aufbau verhältnismäßig kompliziert und infolgedessen störanfällig.

Der Erfindung liegt die Aufgabe zugrunde, das gattungsgemäße Verfahren so auszubilden, daß eine höhere Stückzahl von ausgeformten Teigsträngen pro Zeiteinheit bei mindestens gleicher Qualität wie sie mit der manuellen Herstellung erreicht wird, erzielt wird, wobei die Ausformung der Teigstränge zeitlich beliebig durchgeführt wird. Außerdem soll eine Vorrichtung zur Durchführung des Verfahrens angegeben werden.

Diese Aufgabe wird bei einem gattungsgemäßen Verfahren dadurch gelöst, daß die Teigstränge zwischen einer Aufnahmestation, an der die Enden jedes Teigstranges ergriffen werden, einer Knotenbildungsstation und einer Freigabestation, an der die Enden des verformten Teigstranges wieder freigegeben werden, in beliebigen Abständen kontinuierlich gefördert werden, daß zwischen der Aufnahmestation und der Knotenbildungsstation die Enden jedes Teigstranges gegeneinander bewegt und das Mittelteil und die Seitenabschnitte unter die Enden abgesenkt werden, wobei das Mittelteil und die Seitenabschnitte eine bogenförmige Schleife bilden, die an der Knotenbildungsstation um eine vertikale Achse relativ zu den Enden um 360° gedreht wird, und daß zwischen der Knotenbildungsstation und der Freigabestation das Mittelteil und die Seitenabschnitte um eine unter dem Knoten verlaufende horizontale Achse nach oben in eine Horizontallage unter den Enden umgelegt werden, die sich nach ihrer Freigabe auf die Seitenabschnitte aufgrund ihres Eigengewichtes absenken.

Der wesentliche Vorteil dieses Verfahrens im Vergleich zu den bekannten Verfahren ist sein kontinuierlicher Ablauf und die Möglichkeit, die Teigstränge in beliebigen Zeitabständen auszuformen, wobei eine außerordentlich hohe Stückzahl pro Zeiteinheit, z.B. 3000 Stück pro Stunde, erzielbar ist.

Vorteilhafte Ausgestaltungen sind in den Ansprüchen 2 bis 5 angegeben.

Die oben genannte Aufgabe wird bei einer Vorrichtung zur Durchführung des Verfahrens dadurch gelöst, daß zwei nebenein ander angeordnete jeweils eine Endlosschleife bildende Greifbänder mit jeweils einem in der Förderrichtung des Teigstranges bewegbaren Trum vorgesehen sind, die zwischen der Aufnahmestation und der Freigabestation U-förmig nach innen zur Bildung von zwei sich gegenüberliegenden Schenkeln gefaltet sind, zwischen denen ein jeweiliges Ende jedes Teigstranges einklemmbar ist, daß die oberen Trume in der Förderrichtung zwischen der Aufnahmestation und der Knotenbildungsstation zusammenlaufen und zwischen der Knotenbildungsstation und der Freigabestation wieder auseinanderlaufen, daß zwischen der Aufnahmestation und der Knotenbildungsstation eine in Richtung der Knotenbildungsstation schräg abfallende Unterlage zur Abstützung des Mittelteils des Teigstranges unter den oberen Trumen der Greifbänder angeordnet ist, daß an der Knotenbildungsstation zwei um jeweils eine vertikale Achse gleichsinnig synchron drehantreibbare Antriebsvorrichtungen unter den oberen Trumen quer zur Förderrichtung voneinander beabstandet angeordnet sind, daß jede der Antriebsvorrichtungen mindestens eine in radialer Richtung verlaufende Anschlagfläche aufweist, mit der die bogenförmige Schleife des Teigstranges im radialen Abstand von deren Drehachse in Anlage bringbar ist, daß zwischen der Knotenbildungsstation und der Freigabestation ein in Richtung der Freigabestation schräg ansteigendes erstes Förderband zur Abstützung des Mittelteils und der Seitenabschnitte des verformten Teigstranges vorgesehen ist, dessen oberes Trum in Förderrichtung bewegbar ist.

Die Vorrichtung kann kontinuierlich betrieben werden, wobei die Schlingenbildung bedarfsweise durchgeführt wird, wodurch die erfindungsgemäße Vorrichtung robust und zuverlässig ausgebildet werden kann und ihre Leistung durch Ändern der Betriebsgeschwindigkeit an die Bedürfnisse des einzelnen Bäckereibetriebes angepaßt werden kann.

Vorteilhafte Weiterbildungen der Vorrichtung sind in den Ansprüchen 7 bis 15 angegeben.

Ein Ausführungsbeispiel der Erfindung ist in den Zeichnungen dargestellt und wird im folgenden, ebenso wie das Verfahren, näher beschrieben. Es zeigt

Figur 1 eine Seitenansicht der Brezelformvorrichtung in stark schematisierter Darstellung,

Figur 2 eine Draufsicht auf die in Figur 1 gezeigte Brezelformvorrichtung in stark schematisierter Darstellung,

Figur 3 einen Schnitt entlang der Linie B-B in Figur 2, wobei die beiden Greifbänder zusammen mit ihren Führungskanälen im Schnitt und die bogenförmige Schlinge des Teigstranges in der Draufsicht vergrößert dargestellt sind und

Figur 4 eine Draufsicht auf einen Teil einer abgewandelten Brezelformvorrichtung.

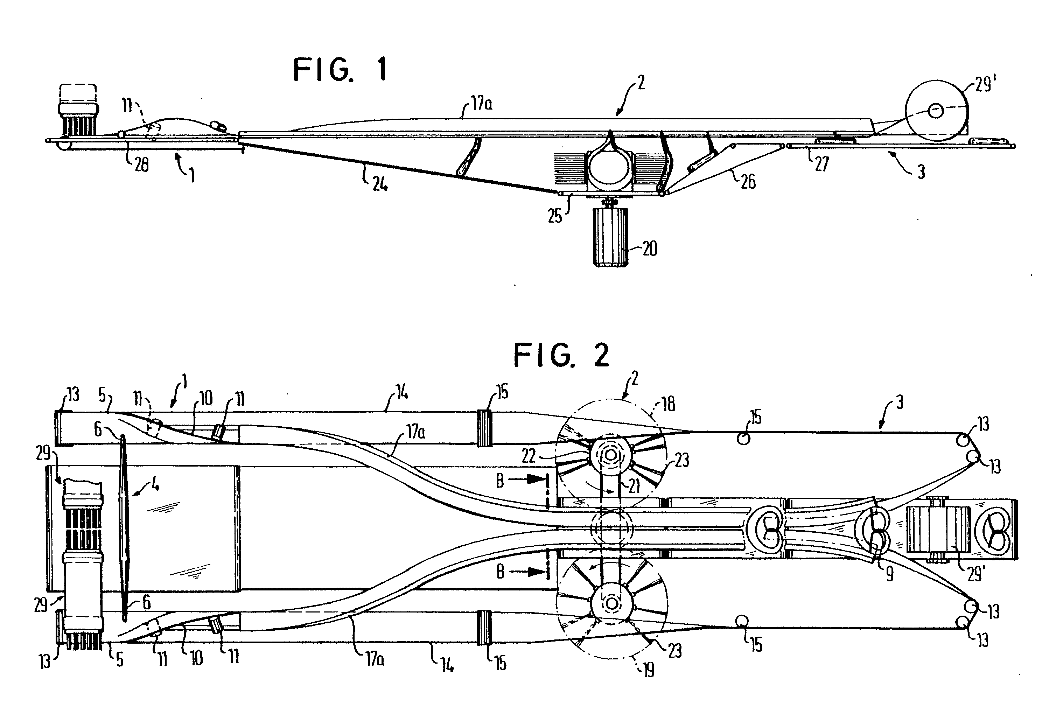

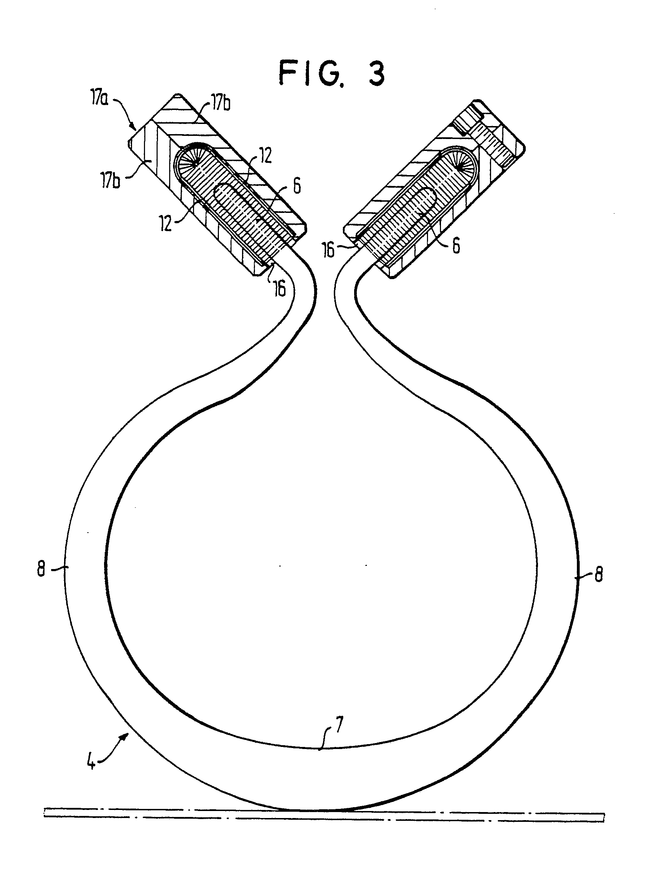

Die Brezelformvorrichtung ist hinsichtlich des gesamten Arbeitsablaufes bei der Brezelherstellung einer nicht dargestellten, an sich bekannten Teigstrangherstellungsmaschine nachgeordnet, wobei in den Figuren 1 und 2 der Eingang der Brezelformvorrichtung links und der Ausgang rechts anzunehmen ist, so daß die Förderrichtung ebenfalls von links nach rechts in den Figuren 1 und 2 verläuft. In Förderrichtung gesehen, weist die Brezelformvorrichtung nacheinander eine Aufnahmestation 1, eine Knotenbildungsstation 2 und eine Freigabestation 3 auf. An der Aufnahmestation 1 werden die Enden 6 eines von der Teigstrangherstellungsmaschine vorgefertigten Teigstranges 4 von zwei nebeneinander angeordneten Greifbändern 5 ergriffen, die den Teigstrang 4 in Förderrichtung bewegen. An der Knotenbildungsstation 2 wird die inzwischen aus Mittelteil 7 und Seitenabschnitten 8 des Teigstranges 4 gebildete bogenförmige Schleife, wie sie in Figur 3 ersichtlich ist, um 360° gegenüber den Enden 6 des Teigstranges 4 verwunden, so daß in den Seitenabschnitten 8 in der Nähe der Enden 6 ein Knoten 9 entsteht, wie er in Fig. 2 am ausgeformten Teigstrang erkennbar ist. An der Freigabestation 3 werden die Enden 6 des Teigstranges 4 von den Greifbändern 5 freigegeben, wonach sie sich unter ihrem Eigengewicht auf die Seitenabschnitte 8 im Bereich zwischen dem Knoten 7 und den Enden 6 absenken.

Jedes Greifband 5 ist als eine Endlosschleife ausgebildet und weist ein in der Förderrichtung des Teigstranges 4 bewegbares oberes Trum 10 auf, das im wesentlichen in einer Horizontalebene verläuft. Wie aus Fig. 2 ersichtlich ist, wird an der Aufnahmestation 1 jedes Greifband 5 mit Hilfe von schräg gestellten Stützrollen 11 U-förmig nach innen gefaltet, so daß sich bei jedem Greifband 5 zwei Schenkel 12 ausbilden, zwischen denen ein jeweiliges Ende des Teigstranges 4 einklemmbar ist, wie in Fig. 3 ersichtlich ist, um in Förderrichtung mitgenommen zu werden. Den U-förmig gefalteten Zustand behält das obere Trum 10 jedes Greifbandes bis zur Freigabestation bei, wonach es wieder in seine ebene Bandform übergeht, wie aus Fig. 2 ersichtlich ist. Während die Umlenkrollen 13 der Greifbänder 5 am Eingang der Brezelformvorrichtung um horizontale Achsen drehbar sind, sind die Umlenkrollen 13 am Ausgang der Brezelformvorrichtung um vertikale Achsen drehbar. Die sich dadurch ergebende Verwindung des oberen Trums 10 jedes Greifbandes 5 wird entlang des unteren Trums 14 mit Unterstützung der längs des unteren Trums 14 angeordneten Stützrollen 15 wieder rückgängig gemacht, wie aus Fig. 2 ersichtlich ist. Die Greifbänder 5 sind auf ihrer Außenseite mit Fasern beschichtet, so daß sie eine velourteppichartige Oberflächenstruktur erhalten, die federnd elastisch und sehr griffig gegenüber den Teigsträngen ist. Im gefalteten Zustand sind die Fasern gegeneinander gerichtet, wie aus Fig. 3 ersichtlich ist.

Zwischen der Aufnahmestation 1 und der Freigabestation 3 verläuft das U-förmig gefaltete obere Trum 10 jedes Greifbandes 5 in einem jeweiligen Führungskanal 16, der aus einem im Querschnitt U-förmigen Führungsteil 17a gebildet wird, das aus zwei miteinander verschraubten Hälften 17b hergestellt ist. Zwischen der Aufnahmestation 1 und der Knotenbildungsstation 2 sind die Führungsteile 17a symmetrisch zueinander S-förmig gebogen, so daß die Führungskanäle 16, ausgehend von der Aufnahmestation 1, bis zur Knotenbildungsstation 2 nach innen verlaufen und infolgedessen die oberen Trume 10 der Greifbänder 5 einen entsprechenden Verlauf zwischen der Aufnahmestation 1 und der Knotenbildungsstation 2 annehmen. Zwischen der Knotenbildungsstation 2 und der Freigabestation 3 verlaufen die Führungsteile 17a und damit die Führungskanäle 16 und infolgedessen auch die oberen Trume 10 der Greifbänder 5 parallel in einem geringen Abstand zueinander. An der Freigabestation 3 sind die Führungsteile 17a und damit die Führungskanäle 16 nach außen gebogen, wodurch sich der Abstand zwischen den oberen Trumen 10 der Greifbänder 5 wieder vergrößert. Während die Führungsteile 17a an der Freigabestation bogenförmig nach außen laufen, erweitern sich die Führungskanäle 16 gleichzeitig. Durch die Erweiterung der Führungskanäle 16 öffnet sich auch die Falte des jeweiligen oberen Trums 10 des entsprechenden Greifbandes 5, wodurch die auf die Enden 6 des Teigstranges 4 wirkende Klemmkraft aufgehoben wird. Durch das Auseinanderbewegen der oberen Trume 10 an der Freigabestation 3 bei gleichzeitiger Öffnung der in dem oberen Trum gebildeten Falte können die Enden 6 aus der Falte der oberen Trume 10 der Greifbänder 5 bis zur endgültigen Freigabe herausrutschen.

An der Knotenbildungsstation 2 sind zwei um jeweils eine vertikale Achse gleichsinnig synchron drehantreibbare Bürstenwalzen 18, 19 als Antriebsvorrichtungen zum Bewirken der 360°-Drehung der bogenförmigen Schleife des Teigstranges vorgesehen. Die beiden Bürstenwalzen 18 und 19 sind quer zur Förderrichtung voneinander beabstandet, wobei die Führungsteile 17a und damit die oberen Trume 10 der Greifbänder 5 zwischen den parallelen Drehachsen der Bürstenwalzen 18 und 19 oberhalb der Bürstenwalzen 18 und 19 verlaufen. Ein Motor 20 treibt die beiden Bürstenwalzen 18 und 19 über ein eine Endlosschleife bildendes Antriebselement 21, wie z.B. einen Zahnriemen, synchron und gleichsinnig an.

Die beiden Bürstenwalzen 18 und 19 weisen jeweils eine zylindrische Walze 22 auf, an deren Umfang insgesamt acht in radialer Richtung weisende Bürsten 23 befestigt sind, die in verschiedenen Winkelabständen voneinander angeordnet sind, wobei die Winkelabstände der Bürsten 23 der Bürstenwalze 18 verschieden von den Winkelabständen der Bürsten 23 der Bürstenwalze 19 sind.

Jeweils vier Bürsten 23 von jeder Bürstenwalze 18 und 19 werden dazu eingesetzt, um die gewünschte 360°-Drehung der bogenförmigen Schleife eines jeweiligen Teigstranges 4 durchzuführen. Durch die Verwendung von insgesamt acht Bürsten 23 bei jeder Bürstenwalze 18 und 19 können durch eine vollständige Drehung der beiden Bürstenwalzen 18 und 19 um jeweils 360° zwei aufeinanderfolgende Teigstränge 4 um 360° gedreht werden.

Die Bürstenwalzen 18 und 19 werden nur in Betrieb gesetzt, wenn ein Teigstrang 4 an der Knotenbildungsstation 2 vorhanden ist. Hingegen werden die Greifbänder 5 kontinuierlich bewegt. Die Winkelabstände zwischen den Bürsten 23 der Bürstenwalzen 18 und 19 sind so gewählt, daß die bogenförmige Schleife eines an der Knotenbildungsstation 2 befindlichen Teigstranges 4 durch zwei schräg sich gegenüberliegende Bürsten 23 der beiden Bürstenwalzen 18 und 19 zu einer Drehung von zunächst 180° von ihrer Ausgangsstellung in eine Zwischen- oder Mittelstellung angeregt wird, daß in der Zwischenstellung zwei weitere sich gegenüberliegende Bürsten 23 der Bürstenwalzen 18 und 19 die Drehung der bogenförmigen Schleife abbremsen, daß dann ein drittes sich gegenüberliegendes Paar Bürsten 23 der Bürstenwalzen 18 und 19 die bogenförmige Schleife des Teigstranges 4 erneut zu einer Drehung um 180° von der Mittelstellung in ihre Endstellung anregen und daß ein viertes Paar von sich gegenüberliegenden Bürsten 23 der Bürstenwalzen 18 und 19 die bogenförmige Schleife in ihrer um 360° gegenüber der Ausgangsstellung gedrehten Endstellung abbremsen.

Die in zwei Schritten durchgeführte Drehung der bogenförmigen Schleife um insgesamt 360° mit einem Stopp nach dem ersten Schritt bei 180° soll sicherstellen, daß eine übermäßige Verformung der Schleife durch Zentrifugalwirkung vermieden wird. Würde die bogenförmige Schleife auf einmal um 360° gedreht werden, könnten die Zentrifugalkräfte so groß werden, daß die Schleife übermäßig verformt werden könnte. Allerdings ist die bei der Drehung auftretende Verformung auch von der Zähigkeit oder Festigkeit der jeweiligen Teigsorte abhängig, und es ist durchaus möglich, daß bei einer entsprechenden Zubereitung des Teigs eine 360°-Drehung der Schleife in einem Zug durchgeführt werden kann, ohne eine übermäßige Verformung befürchten zu müssen.

Die Einleitung der Drehung der Bürstenwalzen 18 und 19 wird durch eine nicht dargestellte Steuervorrichtung, wie z.B. eine Lichtschranke, ausgelöst, die das Eintreffen eines Teigstranges 4 an der Knotenbildungsstation 2 wahrnimmt. Die Bürstenwalzen 18 und 19 drehen sich schrittweise, wobei sie nach der anfänglichen Drehung, durch die die Schleife von der Ausgangsstellung in die Mittelstellung gebracht wird, wieder angehalten werden, um die Drehung der Schleife bei 180° zu unterbrechen. Danach werden die Bürstenwalzen 18 und 19 wieder in Betrieb gesetzt, um die Drehung der Schleife von der Zwischenstellung in die Endstellung zu bewirken.

Sowohl in der Ausgangsstellung als auch in der Endstellung befindet sich die bogenförmige Schleife des Teigstranges 4 in einer Vertikalebene, die von der Förderrichtung senkrecht durchsetzt wird.

Aus der obigen Beschreibung wird deutlich, daß die bogenförmige Schleife des Teigstranges 4 an der Knotenbildungsstation 2 zweimal stoßartig zur Drehung angeregt wird, während sie über den größten Teil ihrer Drehbewegung keine zusätzliche äußere Anregung benötigt und sich infolgedessen frei dreht. Die freie Drehung hat die Wirkung, daß die Zentrifugalkräfte voll an der bogenförmigen Schleife angreifen können, wodurch sicherge stellt wird, daß sich der Knoten 9 in unmittelbarer Nähe zu den Enden 6 ausbildet und aufgrund der Zugspannungen in den Seitenabschnitten 8 der Knoten 9 wie gewünscht fest wird.

Da die Greifbänder 5 kontinuierlich betrieben werden, bewegt sich der Teigstrang 4 auch während seiner Drehung um 360° in Förderrichtung weiter. Auch diese Weiterbewegung des Teigstranges 4 während der Drehung wird bei der Wahl der Winkelabstände zwischen den Bürsten 23 und der Drehgeschwindigkeit der Bürstenwalzen 18 und 19 berücksichtigt.

Zwischen der Aufnahmestation 1 und der Knotenbildungsstation 2 befindet sich eine in Richtung der Knotenbildungsstation 2 schräg abfallende Unterlage 24, die aus einem einfachen Blech oder aber auch aus einem Förderband bestehen kann. Die schräg abfallende Unterlage 24 befindet sich im wesentlichen unter den oberen Trumen 10 der Greifbänder 5 und dient zur Abstützung des Mittelteils 7 des Teigstranges 4. Ist die Unterlage 24 fest, wie z.B. wenn sie aus einem Blech besteht, rutscht das Mittelteil 7 auf dem Blech hinab auf dem Weg des Teigstranges 4 zur Knotenbildungsstation 2, wie aus Fig. 1 deutlich wird.

Am unteren Ende der Unterlage 24 schließt sich an der Knotenbildungsstation 2 ein horizontales Förderband 25 an, dessen oberes Trum in Förderrichtung mit der gleichen Geschwindigkeit wie die oberen Trume 10 der Greifbänder 5 bewegbar ist.

Dem Förderband 25 ist ein Förderband 26 nachgeschaltet, dessen oberes Trum in einem ersten Abschnitt, von der Knotenbildungsstation 2 ausgehend, schräg nach oben verläuft und in einem zweiten Abschnitt horizontal verläuft und in Förderrichtung bewegbar ist. Die Fördergeschwindigkeit des Förderbandes 26 ist verstellbar, so daß sich die Möglichkeit ergibt, nicht nur die Richtung der Umlegbewegung des Mittelteils 7 und der Seitenabschnitte 8 wunschgemäß festzulegen, sondern auch die Stelle zu variieren, an der sich die Enden 6 auf die Seitenabschnitte 8 an der Freigabestelle 3 absenken. Im dargestellten Beispiel ist die Geschwindigkeit des Förderbandes 26 so gewählt, daß sich die bogenförmige Schleife des Teigstranges auf dem ansteigenden Abschnitt des oberen Trums des Förderbandes 26 nach hinten umlegt, wobei das Mittelteil 7 des Teigstranges 4 den Enden 6 des Teigstranges 4 nacheilt.

Wird die Geschwindigkeit des Förderbandes 26 wesentlich höher als die Geschwindigkeit der Greifbänder 5 eingestellt, wird eine Umlegbewegung des Mittelteils 7 und der Seitenabschnitte 8 auf dem ansteigenden Abschnitt des oberen Trums des Förderbandes 26 nach vorne erzielt, wobei dann das Mittelteil 7 den Enden 6 des Teigstranges 4 voreilt.

Sowie bei voreilendem als auch bei nacheilendem Mittelteil 7 kann dann durch eine kleinere Änderung der Geschwindigkeit des Förderbandes 26 die Stelle variiert werden, an der die Enden 6 auf den Seitenabschnitten 8 abgelegt werden. Der Bäcker erhält hierdurch die Möglichkeit, die Brezelformen den regional unterschiedlichen Vorstellungen oder Wünschen der Kundschaft anzupassen.

Dem Förderband 26 ist ein weiteres Förderband 27 nachgeschaltet, das unterhalb der Greifbänder 5 wieder in einer Horizontalebene verläuft und mit einer Geschwindigkeit betrieben wird, die mit der Geschwindigkeit der Greifbänder 5 übereinstimmt.

Auch an der Aufnahmestation befindet sich ein horizontal verlaufendes Förderband 28, das sich entgegengesetzt zur Förderrichtung bis zum Ausgang der vorgeschalteten Teigstrangherstellungsmaschine erstreckt.

Alle Förderbänder 25, 26, 27, 28 werden von einem gemeinsamen nicht dargestellten Motor angetrieben, wobei das Förderband 26 mit dem Motor über ein Getriebe verbunden ist, das die beschriebene Geschwindigkeitsregelung des Förderbandes 26 ermöglicht.

Vor der Aufnahmestation 1 sind über dem Förderband 28 zwei um zwei parallele, in Förderrichtung verlaufende Drehachsen drehbare Bürsten 29 angeordnet, die gegenläufig drehbar sind, wobei ihre Umfangsgeschwindigkeit an der Unterseite nach außen gerichtet ist. Zwischen den Bürsten 29 und dem oberen Trum des Förderbandes 28 sind die Teigstränge auf dem oberen Trum des Förderbandes 28 hindurchbewegbar, wobei im Betrieb der Bürsten 29 die von der Teigstrangherstellungsmaschine gelieferten Teigstränge 4 geradlinig ausgerichtet werden, soweit sie etwas verformt sind.

Der Freigabestation 3 nachgeordnet ist eine Walze 29', die um eine horizontale, quer zur Förderrichtung verlaufende Achse drehbar ist. Die Walze 29' kann frei drehbar oder auch angetrieben sein, wobei ihre Drehrichtung so gewählt ist, daß ihre Umfangsgeschwindigkeit an der Unterseite in Förderrichtung weist. Zwischen der Unterseite der Walze 29' und dem oberen Trum des Förderbandes 27 befindet sich ein Spalt, durch den der ausgeformte Teigstrang 4 hindurchbewegbar ist, wobei der Teigstrang 4 zusammengedrückt wird, wobei auch die Enden 6 an der Stelle, an der sie auf den Seitenabschnitten 8 abgelegt sind, angepreßt werden. Der Teig ist so elastisch, daß der vorgeformte Teigstrang 4 nach seinem Durchlauf an der Walze 29' wieder seine Form annimmt, die er vor dem Durchlauf an der Walze 29' hatte.

Nachdem der ausgeformte Teigstrang 4 die Walze 29' passiert hat, ist der Brezelformvorgang beendet und der ausgeformte Teigstrang 4 kann einer weiteren Bearbeitungsstufe der Brezelherstellung zugeführt werden.

Im folgenden wird nun die Arbeitsweise der Brezelformvorrichtung und damit das Brezelformverfahren näher beschrieben, soweit es nicht bereits aus der vorhergehenden Beschreibung der Vorrichtung deutlich geworden ist.

Nachdem der vorgefertigte Teigstrang 4, auf dem oberen Trum des Förderbandes 28 liegend, die Bürsten 29 passiert hat, die ihn geradegestrichen haben, wenn er verformt war, werden seine Enden 6 an der Aufnahmestation 1 zwischen die beiden Schenkel des U-förmig gefalteten oberen Trums 10 der Greifbänder 5 eingeklemmt und von den Greifbändern 5 in Förderrichtung mitgenommen. Durch das Zusammenlaufen der oberen Trume 10 der Greifbänder 5 im Bereich zwischen der Aufnahmestation 1 und der Knotenbildungsstation 2 werden die Enden 6 des Teigstranges 4 gegeneinander bewegt, wobei gleichzeitig die Seitenabschnitte 8 und das Mittelteil 7 aufgrund der Rutschbewegung auf der Unterlage 24 abgesenkt werden, so daß sich an der Knotenbildungsstation 2 die in Figur 3 dargestellte bogenförmige Schleife des Teigstranges 4 ausgebildet hat. An der Knotenbildungsstation 2 wird die bogenförmige Schleife, wie bereits beschrieben, mit Hilfe der Bürstenwalzen 18 und 19 um 360° gedreht, so daß sich am oberen Ende der bogenförmigen Schleife in der Nähe der Enden 6 der Knoten 9 ausbildet. Auch während der Drehung der bogenförmigen Schleife des Teigstranges 4 wird der Teigstrang 4 in Förderrichtung weiterbewegt. Nach der Knotenbildungsstation 2 kommen zunächst das Mittelteil 7 und dann die Seitenabschnitte 8 auf dem ansteigenden Abschnitt des oberen Trums des Förderbandes 26 zur Anlage, wobei das Mittelteil 7 und die Seitenabschnitte 8 um eine unterhalb des Knotens 9 quer zur Förderrichtung verlaufende horizontale Achse nach oben in eine Horizontallage unter den Enden 6 umgelegt werden. In dieser Lage wird der Teigstrang 4 von dem Förderband 26 auf das Förderband 27 an der Freigabestation 3 übergeben. An der Freigabestation 3 laufen die oberen Trume 10 der Greifbänder 5 wieder auseinander, wobei sich ihre U-förmige Falte gleichzeitig öffnet. Das Auseinanderlaufen der oberen Trume 10 der Greifbänder 5 und das gleichzeitige Öffnen der U-förmigen Falte bewirken, daß sich die Enden von den Greifbändern 5 lösen und sich dann aufgrund ihres Eigengewichts auf die Seitenabschnitte 8 im Bereich zwischen den Knoten 9 und dem Mittelteil 7 absenken. Der von den Greifbändern 5 freigegebene Teigstrang 4 wird auf dem Förderband 27 unter der Walze 29' hindurchgefördert, wobei er überrollt wird, so daß die Enden 6 an die Seitenabschnitte 8 angepreßt werden.

Die Teigstränge 4 durchlaufen die Brezelformvorrichtung also kontinuierlich, wobei ihre gegenseitigen Abstände beliebig sein können, da die einzelnen Formgebungsschritte nicht an bestimmte Takte gebunden sind.

Es sind eine Vielzahl von Abwandlungen des Ausführungsbeispiels möglich, die alle im Rahmen der Erfindung liegen. So können z.B. anstelle von zwei sich gegenüberliegenden Bürstenwalzen 18 und 19 zwei hintereinandergeschaltete Paare von Bürstenwalzen angeordnet sein, wobei das erste Paar eine Drehung der bogenförmigen Schleife um 180° und das nachfolgende Paar eine Drehung von 180 auf 360° bewirkt. Anstelle von Bürstenwalzen kann auch ein Drehteller verwendet werden, auf dem das Mittelteil des Teigstranges 4 an der Knotenbildungsstation 2 aufliegt und der dann um 360° drehbar ist, wobei sich die bogenförmige Schleife mitdreht und der Knoten ausgebildet wird.

Ferner können die Führungsteile 17a statt aus zwei Hälften 17b jeweils aus einem einzigen U-förmig gebogenen Blechteil hergestellt sein, das aus Edelstahlblech hergestellt ist.

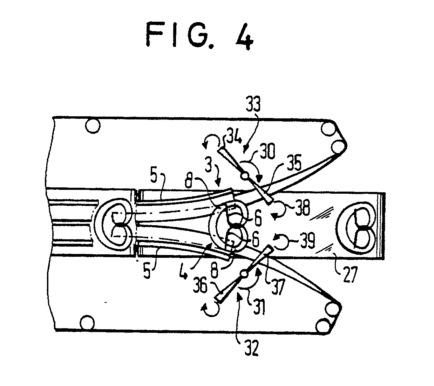

Anstelle der Walze 29' können zwei um jeweils eine vertikale Achse gegensinnig synchron in Richtung der Pfeile 30, 31 drehantreibbare Walzvorrichtungen 32, 33 vorgesehen sein, wie aus Figur 4 ersichtlich ist. Die Walzvorrichtungen sind quer zur Förderrichtung einander gegenüber angeordnet und haben jeweils zwei radial bezüglich der jeweiligen Drehachse in entgegengesetzte Richtungen verlaufende Arme 34, 35 bzw. 36, 37, die um ihre Längsachse frei drehbar sind. Jeder Arm 34, 35, 36, 37 ist nach außen konisch erweitert. Im Betrieb drehen sich die Arme 34, 35, 36, 37 der Walzvorrichtungen 32, 33 im Abstand über dem oberen horizontalen Trum des zweiten Förderbandes 27 auf eine Kreisbahn um die jeweilige Drehachse der entsprechenden Walzvorrichtung 32 und 33, wobei jeder Arm auf dem Teigstrang 4 abrollt und dabei die Enden 6 auf die Seitenabschnitte 8 herauszieht und daran anpreßt. Das Herausziehen der Enden 6 des Teigstranges 4 auf die Seitenabschnitte 8 kann dadurch gefördert werden, daß die Arme entweder in Richtung der Pfeile 38, 39 drehangetrieben werden, so daß ihre Umfangsgeschwindigkeit etwas größer als die Fördergeschwindigkeit des Teigstranges 4 ist, oder daß sie beim Abrollen auf den Teigstrang 4 gebremst werden.

**Ansprüche**

1. Verfahren zum Formen von Brezeln aus vorgefertigten Teigsträngen (4), wobei in zwei sich gegenüberliegenden Seitenabschnitten (8) zwischen einem Mittelteil (7) und den Enden (6) eines jeden Teigstranges (4) ein Knoten (9) durch eine relative Verwindung von 360° zwischen den Enden (6) und dem Mittelteil (7) gebildet wird und dann die Enden (6) und die Seitenabschnitte (8) im Bereich zwischen dem Knoten (9) und dem Mittelteil (7) miteinander verbunden werden, dadurch gekennzeichnet, daß die Teigstränge (4) zwischen einer Aufnahmestation (1), an der die Enden (6) jedes Teigstranges (4) ergriffen werden, einer Knotenbildungsstation (2) und einer Freigabestation (3), an der die Enden (6) des verformten Teigstranges (4) wieder freigegeben werden, in beliebigen Abständen kontinuierlich gefördert werden, daß zwischen der Aufnahmestation (1) und der Knotenbildungsstation (2) die Enden (6) jedes Teigstranges (4) gegeneinanderbewegt und das Mittelteil (7) und die Seitenabschnitte (8) unter die Enden (6) abgesenkt werden, wobei das Mittelteil (7) und die Seitenabschnitte (8) eine bogenförmige Schleife bilden, die an der Knotenbildungsstation (2) um eine vertikale Achse relativ zu den Enden (6) um 360° gedreht wird, und daß zwischen der Knotenbildungsstation (2) und der Freigabestation (3) das Mittelteil (7) und die Seitenabschnitte (8) um eine unter dem Knoten (9) verlaufende horizontale Achse nach oben in eine Horizontallage unter den Enden (6) umgelegt werden, die sich nach ihrer Freigabe auf die Seitenabschnitte (8) aufgrund ihres Eigengewichtes absenken.

2. Verfahren nach Anspruch 1, dadurch **gekennzeichnet**, daß die bogenförmige Schleife an der Knotenbildungsstation (2) stoßartig zu der Drehung angeregt wird, die sie über den größten Teil ihrer 360°-Drehung ohne zusätzliche äußere Anregung ausführt.

3. Verfahren nach Anspruch 2, dadurch **gekennzeichnet** daß die bogenförmige Schleife in ihrer Ausgangsstellung und in einer um 180° gegenüber der Ausgangsstellung gedrehten Mittelstellung jeweils stoßartig zu der Drehung angeregt wird, die sie zwischen diesen beiden Stellungen und zwischen der Mittelstellung und der um 360° gegenüber der Ausgangsstellung gedrehten Endstellung ohne zusätzliche äußere Anregung ausführt, und daß die bogenförmige Schleife in ihrer Drehung beim Erreichen der Mittelstellung zunächst gebremst und wieder beschleunigt wird und beim Erreichen der Endstellung endgültig gebremst wird.

4. Verfahren nach einem der vorhergehenden Ansprüche, dadurch **gekennzeichnet**, daß an der Freigabestation (3) die Enden (6) jedes Teigstranges (4) auseinanderbewegt werden, wobei sie freigegeben werden und sich auf die Seitenabschnitte (8) absenken können.

5. Verfahren nach einem der vorhergehenden Ansprüche, dadurch **gekennzeichnet**, daß jeder verformte Teigstrang (4) nach der Freigabestation (3) mit einer Walze (29; 32, 33) überrollt wird, wobei die Enden (6) an ihrer Auflagestelle an den Seitenabschnitten (8) angepreßt werden.

6. Vorrichtung zur Durchführung des Verfahrens nach einem der Ansprüche 1 bis 5, dadurch **gekennzeichnet**, daß zwei nebeneinander angeordnete jeweils eine Endlosschleife bildende Greifbänder (5) mit jeweils einem in der Förderrichtung des Teigstranges (4) bewegbaren oberen Trum (10) vorgesehen sind, die zwischen der Aufnahmestation (1) und der Freigabestation (3) U-förmig nach innen zur Bildung von zwei sich gegenüberliegenden Schenkeln (12) gefaltet sind, zwischen denen ein jeweiliges Ende (6) jedes Teigstranges (4) einklemmbar ist, daß die oberen Trume (10) in der Förderrichtung zwischen der Aufnahmestation (1) und der Knotenbildungsstation (2) zusammenlaufen und zwischen der Knotenbildungsstation (2) und der Freigabestation (3) wieder auseinanderlaufen, daß zwischen der Aufnahmestation (1) und der Knotenbildungsstation (2) eine in Richtung der Knotenbildungsstation (2) schräg abfallende Unterlage (24) zur Abstützung des Mittelteils (7) des Teigstranges (4) unter den oberen Trumen (10) der Greifbänder (5) angeordnet ist, daß an der Knotenbildungsstation (2) zwei um jeweils eine vertikale Achse gleichsinnig synchron drehantreibbare Antriebsvorrichtungen (Bürstenwalzen 18, 19) unter den oberen Trumen (10) quer zur Förderrichtung voneinander beabstandet angeordnet sind, daß jede der Antriebsvorrichtungen (Bürstenwalzen 18, 19) mindestens eine in radialer Richtung verlaufende Anschlagfläche aufweist, mit der die bogenförmige Schleife des Teigstranges (4) im radialen Abstand von deren Drehachse in Anlage bringbar ist, daß zwischen der Knotenbildungsstation (2) und der Freigabestation (3) ein in Richtung der Freigabestation (3) schräg ansteigendes erstes Förderband (26) zur Abstützung des Mittelteils (7) und der Seitenabschnitte (8) des verformten Teigstranges (4) vorgesehen ist, dessen oberes Trum in Förderrichtung bewegbar ist.

7. Vorrichtung nach Anspruch 6, dadurch **gekennzeichnet**, daß jedes der oberen Trume (10) der Greifbänder (5) zwischen der Aufnahmestation (1) und der Freigabestation (3) in jeweils einem von zwei sich gegenüberliegenden U-förmigen Führungskanälen (16) verläuft, deren Verlauf in Förderrichtung den Verlauf der oberen Trume (10) der Greifbänder (5) bestimmt.

8. Vorrichtung nach Anspruch 6 oder 7, dadurch **gekennzeichnet**, daß die Fördergeschwindigkeit des ersten Förderbandes (26) relativ zu der Geschwindigkeit der Greifbänder (5) variabel ist.

9. Vorrichtung nach einem der Ansprüche 6 bis 8, dadurch **gekennzeichnet**, daß jede Antriebsvorrichtung (Bürstenwalzen 18, 19) aus jeweils einer drehbaren Walze (22) besteht, die an ihrem Umfang in vorbestimmten Winkelabständen radial gerichtete Flügel (Bürsten 23) aufweist, die auf einer in Umfangsrichtung liegenden Seite die Anschlagfläche aufweisen.

10. Vorrichtung nach Anspruch 9, dadurch **gekennzeichnet**, daß die Flügel durch Bürsten (23) gebildet sind.

11. Vorrichtung nach einem der Ansprüche 6 bis 10, dadurch **gekennzeichnet**, daß die Greifbänder (5) auf ihrer Außenseite Fasern tragen, die im U-förmig gefalteten Zustand der Greifbänder (5) gegeneinander weisen.

12. Vorrichtung nach einem der Ansprüche 6 bis 11, dadurch **gekennzeichnet**, daß die Antriebsvorrichtungen (Bürstenwalzen 18, 19) diskontinuierlich betreibbar sind und eine Steuervorrichtung zum Steuern des Betriebs der Antriebsvorrichtungen in Abhängigkeit vom Zeitpunkt der Anwesenheit der Teigstränge (4) an der Knotenbildungsstation (2) vorgesehen ist.

13. Vorrichtung nach einem der Ansprüche 6 bis 12, dadurch **gekennzeichnet**, daß der Freigabestation (3) eine um eine quer zur Förderrichtung verlaufende horizontale Achse drehbare Walze (29') nachgeordnet ist, unter der das obere horizontale Trum eines zweiten Förderbandes (27) angeordnet ist, das dem ersten Förderband (26) nachgeschaltet ist, wobei zwischen der Walzen (29') und dem oberen Trum des zweiten Förderbandes (27) ein Spalt vorhanden ist, durch den der verformte Teigstrang (4) hindurchbewegbar ist, wobei er einer vertikalen Preßkraft ausgesetzt ist.

14. Vorrichtung nach einem der Ansprüche 6 bis 12, dadurch **gekennzeichnet**, daß der Freigabestation (3) zwei um jeweils eine vertikale Drehachse gegensinnig synchron drehantreibbare Walzvorrichtungen (32, 33) nachgeordnet sind, die sich quer zur Förderrichtung einander gegenüberliegen und jeweils mindestens einen sich radial zu der jeweiligen vertikalen Drehachse erstreckenden, konisch nach außen sich erweiternden Arm (34, 35, 36, 37) haben, der um seine Längsachse drehbar ist und im Abstand über dem oberen horizontalen Trum eines dem ersten Förderband (26) nachgeschalteten zweiten Förderbandes (27) auf einer Kreisbahn um die jeweilige vertikale Drehachse bewegbar ist, wobei jeder Arm (34, 35, 36, 37) der jeweiligen Walzvorrichtung auf dem vorgeformten Teigstrang (4) abrollt, wenn sich der Teigstrang (4) auf dem oberen Trum des zweiten Förderbandes (27) unter den Armen (34, 35, 36, 37) der Walzvorrichtungen (32, 33) hindurchbewegt.

15. Vorrichtung nach einem der Ansprüche 6 bis 14, dadurch **gekennzeichnet**, daß vor der Aufnahmestation (1) zwei Bürsten (29) über dem oberen horizontalen Trum eines dritten Förderbandes (28) angeordnet sind, dem die schräge Unterlage (24) nachgeschaltet ist, daß die Bürsten (29) um zwei parallele, horizontal in Förderrichtung verlaufende Achsen gegenläufig mit einer auf ihrer Unterseite nach außen gerichteten Umfangsgeschwindigkeit drehbar sind, daß unter den Bürsten (29) auf dem oberen Trum des dritten Förderbandes (28) die Teigstränge (4) in Förderrichtung hindurchbewegbar sind, wobei die Bürsten (29) ungerade Teigstränge geradestreichen.

16. Vorrichtung nach Anspruch 15, dadurch **gekennzeichnet**, daß die Greifbänder (5) und die Förderbänder (26, 27, 28) von einem gemeinsamen Motor antreibbar sind.

# FIG. 1

# FIG. 2

# FIG. 3

# FIG. 4

<table>
<tr><td></td><td>Europäisches<br>Patentamt</td><td>**EUROPÄISCHER RECHERCHENBERICHT**</td><td>Nummer der Anmeldung<br><br>EP 90 10 2503</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-1 397 233 (J.G. ROBBINS)<br>--- | | A 21 C 3/08 |
| A | US-A-2 031 365 (H.A. GERLAND)<br>--- | | |
| A | CH-A- 470 839 (B.T. RADAY et al.)<br>--- | | |
| D,A | DE-B-2 113 773 (E. DRUCKMILLER et al.)<br>--- | | |
| D,A | DE-A-2 210 845 (E. DRUCKMILLER et al.)<br>----- | | |

**RECHERCHIERTE SACHGEBIETE (Int. Cl.5)**

A 21 C

Der vorliegende Recherchenbericht wurde für alle Patentansprüche erstellt

| Recherchenort | Abschlußdatum der Recherche | Prüfer |
|---|---|---|
| DEN HAAG | 17-05-1990 | FRANKS N.M. |

EPO FORM 1503 03.82 (P0403)